(19) Europäisches Patentamt

European Patent Office

Office européen des brevets

(11) **EP 4 783 413 A1**

(12) **EUROPEAN PATENT APPLICATION**
published in accordance with Art. 153(4) EPC

(43) Date of publication:
29.07.2026 Bulletin 2026/31

(21) Application number: 24867795.7

(22) Date of filing: 01.04.2024

(51) International Patent Classification (IPC):
*H02J 7/35* (2006.01)     *B60R 16/04* (2006.01)
*H02J 1/00* (2026.01)     *H02J 7/00* (2026.01)

(52) Cooperative Patent Classification (CPC):
**B60R 16/04; H02J 1/00; H02J 7/00; H02J 7/02;
H02J 7/35**

(86) International application number:
**PCT/JP2024/013432**

(87) International publication number:
**WO 2025/062705 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 20.09.2023 JP 2023152025

(71) Applicant: Niterra Co., Ltd.
**Nagoya-shi, Aichi 461-0005 (JP)**

(72) Inventors:
• **KUMAZAWA, Shinji**
  **Nagoya-shi, Aichi 461-0005 (JP)**

• **HISADA, Kaoru**
  **Nagoya-shi, Aichi 461-0005 (JP)**
• **SAKATA, Yuichi**
  **Nagoya-shi, Aichi 461-0005 (JP)**
• **YAMAMOTO, Koji**
  **Nagoya-shi, Aichi 461-0005 (JP)**
• **GOTO, Yuichi**
  **Nagoya-shi, Aichi 461-0005 (JP)**

(74) Representative: **Grünecker Patent- und
Rechtsanwälte
PartG mbB
Leopoldstraße 4
80802 München (DE)**

(54) **POWER CONTROL DEVICE FOR ON-VEHICLE SOLAR PANEL**

(57)     A power control device (14) for an on-vehicle solar panel comprises a switch unit (20) and a control unit (24). The control unit (24) switches the switch unit (20) between a supply state and a cut-off state. The control unit (24) monitors the generated power of a solar panel (13) in a state in which a battery management system (12) is stopped, maintains the switch unit (20) in the cut-off state when the generated power of the solar panel (13) falls below a threshold value set to be greater than or equal to the power required for starting the battery management system (12), and switches the switch unit (20) to the supply state when the generated power of the solar panel (13) is greater than or equal to the threshold value.

FIG. 2

EP 4 783 413 A1

**Description**

TECHNICAL FIELD

The present invention relates to a power control device for an on-vehicle solar panel.

BACKGROUND ART

A solar power generation system mounted on a vehicle is disclosed in Patent Literature 1. Electric power (hereinafter referred to as "power") generated by the solar power generation system is charged into a battery mounted on the vehicle.

CITATION LIST

PATENT LITERATURE

Patent Literature 1: JP2021-62841A

SUMMARY OF INVENTION

TECHNICAL PROBLEM

The amount of power generated by the solar power generation system is apt to change in accordance with sunshine conditions. If an attempt is made to operate an electric device or the like in a state in which the amount of power generated by the solar power generation system is small, a case may arise in which the power generated by the solar power generation system alone is not sufficient, and use of the power from the battery becomes necessary.
An object of the present invention is to provide a technique which can suppress the consumption of power of a battery in a vehicle including a solar panel mounted thereon.

SOLUTION TO PROBLEM

A power control device for an on-vehicle solar panel of the present disclosure is used in a vehicle including a battery, a battery management system which receives power supplied from the battery and manages the state of the battery, and a solar panel which supplies power to the battery via a power path.
The power control device comprises:

   a switch section which is provided between the solar panel and the battery and switches between a supply state for supplying power from the solar panel to the battery and a cutoff state for cutting off the power; and
   a control section which switches the switch section between the supply state and the cutoff state,
   wherein the battery management system operates when the switch section is in the supply state and stops its operation when the switch section is in the cutoff state, and
   wherein, in a state in which the battery management system is stopped, the control section monitors the power generated by the solar panel, maintains the switch section in the cutoff state in the case where the power generated by the solar panel is less than a threshold value set to be equal to or greater than a power necessary for starting the battery management system, and switches the switch section to the supply state in the case where the power generated by the solar panel is equal to or greater than the threshold value.

ADVANTAGEOUS EFFECT OF INVENTION

According to the technique of the present disclosure, it is possible to suppress the consumption of power of a battery in a vehicle including a solar panel mounted thereon.

BRIEF DESCRIPTION OF DRAWINGS

   [FIG. 1] FIG. 1 is a configurational diagram of an on-vehicle system which includes a power control device for an on-vehicle solar panel according to a first embodiment.

[FIG. 2] FIG. 2 is a configurational diagram of an on-vehicle system which includes a power control device for an on-vehicle solar panel according to a second embodiment.
[FIG. 3] FIG. 3 is a configurational diagram of an on-vehicle system which includes a power control device for an on-vehicle solar panel according to a third embodiment.
[FIG. 4] FIG. 4 is a configurational diagram of an on-vehicle system which includes a power control device for an on-vehicle solar panel according to a fourth embodiment.

DESCRIPTION OF EMBODIMENTS

[Description of Embodiments of the Present Disclosure]

In the following, embodiments of the present disclosure are listed and shown as examples.

[1] A power control device for an on-vehicle solar panel, which is used in a vehicle including a battery, a battery management system which receives power supplied from the battery and manages the state of the battery, and a solar panel which supplies power to the battery via a power path, the power control device comprising:

a switch section which is provided between the solar panel and the battery and switches between a supply state for supplying power from the solar panel to the battery and a cutoff state for cutting off the power; and
a control section which switches the switch section between the supply state and the cutoff state,
wherein the battery management system operates when the switch section is in the supply state and stops its operation when the switch section is in the cutoff state, and
wherein, in a state in which the battery management system is stopped, the control section monitors the power generated by the solar panel, maintains the switch section in the cutoff state in the case where the power generated by the solar panel is less than a threshold value set to be equal to or greater than a power necessary for starting the battery management system, and switches the switch section to the supply state in the case where the power generated by the solar panel is equal to or greater than the threshold value.
In a state in which the power generated by the solar panel is less than the threshold value, the power generated by the solar panel alone is not sufficient for starting the battery management system, and therefore the power of the battery is consumed. In this regard, the above-described power control device maintains the switch section in the cutoff state in the state in which the power generated by the solar panel is less than the threshold value. Therefore, the battery management system is maintained in the stopped state, whereby the consumption of power of the battery can be suppressed.

[2] The power control device for an on-vehicle solar panel described in [1], further comprising a power conversion section which performs voltage step-up operation or voltage step-down operation for input power based on the power supplied from the solar panel and supplies output power,

wherein the switch section is provided between the power conversion section and the battery, and
wherein, when the control section causes the power conversion section to perform the voltage step-up operation or the voltage step-down operation, the control section switches the switch section to the supply state so as to enable supply of power from the power conversion section to the battery and then causes the power conversion section to perform the voltage step-up operation or the voltage step-down operation.
The above-described power control device causes the power conversion section to perform the conversion operation after switching the switch section to the supply state so as to enable the supply of power from the power conversion section to the battery. Therefore, the above-described power control device is not required to have an electricity storing means (e.g., capacitor) which stores the power outputted from the power conversion section between the power conversion section and the switch section.

[3] The power control device for an on-vehicle solar panel described in [1] or [2], wherein, in a state in which the battery management system is operating, the control section controls the switch section to the supply state in the case where the power generated by the solar panel is greater than a power necessary for controlling the switch section to the supply state.
The above-described power control device can avoid a situation in which the amount of power in the battery instead decreases due to the supply of power from the solar panel.
[4] The power control device for an on-vehicle solar panel described in any one of [1] to [3], further comprising a power conversion section which performs conversion operation of stepping down or stepping up an input voltage inputted from the solar panel side and outputting the stepped down or stepped up voltage to the battery side,

wherein the power path is provided between the power conversion section and the battery, and
wherein the power control device comprises an electricity storing section electrically connected to the power path. In the above-described power control device, the power supplied from the power conversion section to the battery is easily stabilized by storing electricity in the electricity storing section and discharging electricity from the electricity storing section.

[5] The power control device for an on-vehicle solar panel described in [4], wherein, in a state in which the battery management system is operating, the control section controls the switch section to the supply state in the case where the power generated by the solar panel is greater than a power necessary for controlling the switch section to the supply state.
The above-described power control device can avoid a situation in which the amount of power in the battery instead decreases due to the supply of power from the solar panel.
[6] The power control device for an on-vehicle solar panel described in any one of [1] to [5], further comprising:

a power conversion section which performs conversion operation of stepping down or stepping up an input voltage inputted from the solar panel side and outputting the stepped down or stepped up voltage to the battery side;
a first electricity conducting path different from the power path;
a second electricity conducting path provided between the first electricity conducting path and the power conversion section;
a third electricity conducting path provided between the first electricity conducting path and the battery; and
a diode,
wherein the anode of the diode is electrically connected to the second electricity conducting path, and the cathode of the diode is electrically connected to the first electricity conducting path.
The above-described power control device can prevent reverse flow of current from the battery to the power conversion section, while allowing the supply of power to the first electricity conducting path from both of the power conversion section and the battery.

[7] The power control device for an on-vehicle solar panel described in [6], wherein the control section controls the power conversion section such that a voltage of the anode falls within a voltage range within which current flows from the anode to the cathode.
In the above-described power control device, the power from the power conversion section is supplied to the first electricity conducting path in preference to the power from the battery. Therefore, the power control device can suppress the consumption of power of the battery more reliably.
[8] The power control device for an on-vehicle solar panel described in any one of [1] to [7], wherein the battery includes a first battery and a second battery different from the first battery, and the power from the solar panel is supplied to both of the first battery and the second battery.
The above-described power control device can supply the power from the solar panel to both of the first battery and the second battery.
[9] The power control device for an on-vehicle solar panel described in any one of [1] to [8], wherein the switch section is composed of a semiconductor.

The above-described power control device can reduce power consumption as compared with the case where the switch section is configured by using a mechanical circuit breaker.

[Details of Embodiments of the Present Disclosure]

<First embodiment>

1-1. Outline of on-vehicle system

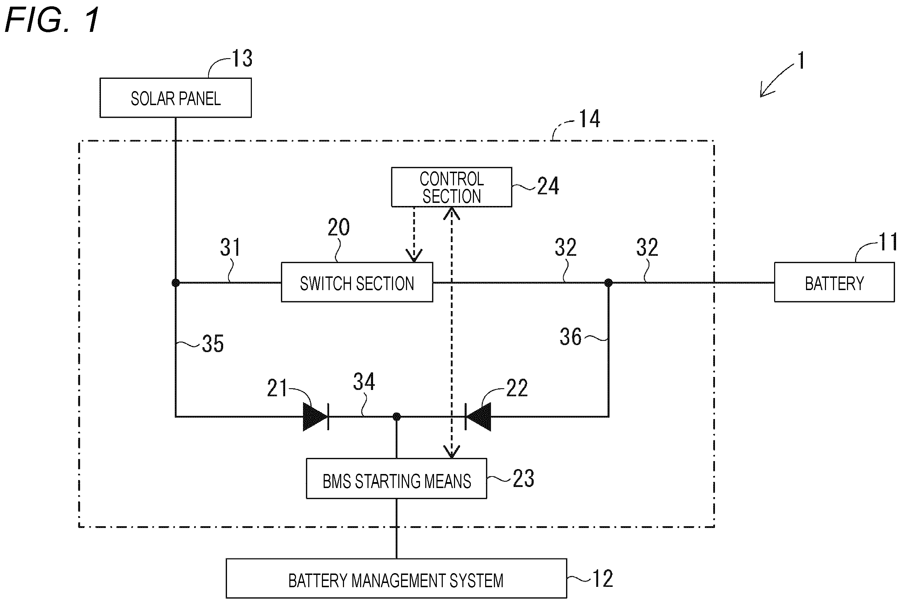

An on-vehicle system 1, which is to be mounted on a vehicle, is shown in FIG. 1. The on-vehicle system 1 includes a battery 11, a battery management system 12, a solar panel 13, and a power control device 14 for an on-vehicle solar panel (hereinafter referred to also as the power control device 14).
The battery 11 is composed of, for example, a lead battery, a lithium ion battery, a sodium ion battery, or the like.
The battery management system 12 is an apparatus which manages the state of the battery 11. The battery management system 12 has a function of preventing overcharge and overdischarge of cells constituting the battery 11, a function of preventing overcurrent of the cells, a function of managing the temperatures of the cells, a function of calculating the quantity of electric energy remaining in the battery, a function of equalizing the cell voltages (cell balance), etc. The battery management system 12 can operate upon reception of power supplied from the battery 11.

The solar panel 13 is configured, for example, by connecting a plurality of solar cells, each of which converts light energy to electric power, and outputs to the power control device 14 the power generated by the plurality of solar cells in accordance with irradiation light. Although only one solar panel 13 is shown in FIG. 1, a plurality of such solar cells 13 are provided in the vehicle. Each of the plurality of solar panels 13 is electrically connected to the power control device 14.

The power control device 14 can receive the power supplied from the solar panel 13 and can output to the battery 11 output power based on the supplied power.

1-2. Basic configuration of power control device

The power control device 14 includes a switch section 20, a first diode 21, a second diode 22, a BMS starting means 23, a control section 24, a first power path 31, a second power path 32, a first electricity conducting path 34, a second electricity conducting path 35, and a third electricity conducting path 36.

The switch section 20 is provided between the solar panel 13 and the battery 11. The switch section 20 switches between a supply state for supplying power from the solar panel 13 to the battery 11 and a cutoff state for cutting off the power. The switch section 20 comes into a permission state when it is turned on and comes into the cutoff state when it is turned off. The switch section 20 is composed of a semiconductor.

The first power path 31 is provided between the solar panel 13 and the switch section 20. The first power path 31 corresponds to one example of the power path. The second power path 32 is provided between the switch section 20 and the battery 11. Power is supplied from the solar panel 13 to the battery 11 via the first power path 31 and the second power path 32.

The first electricity conducting path 34, the second electricity conducting path 35, and the third electricity conducting path 36 are paths different from the first power path 31 and the second power path 32. Between the solar panel 13 and the battery 11, the first electricity conducting path 34 is provided parallel to the switch section 20. The second electricity conducting path 35 is provided between the first electricity conducting path 34 and the first power path 31. The third electricity conducting path 36 is provided between the first electricity conducting path 34 and the second power path 32.

The anode of the first diode 21 is electrically connected to the second electricity conducting path 35. The cathode of the first diode 21 is electrically connected to the first electricity conducting path 34. The first diode 21 corresponds to one example of the diode.

The anode of the second diode 22 is electrically connected to the third electricity conducting path 36. The cathode of the second diode 22 is electrically connected to the first electricity conducting path 34.

The first electricity conducting path 34 is connected to the BMS starting means 23, an unillustrated power supply circuit, etc. and functions as a path for supplying power to the BMS starting means 23, the power supply circuit, etc. The power supply circuit generates and supplies power necessary for driving the switch section 20 and the control section 24. The power from the solar panel 13 is supplied to the first electricity conducting path 34 via the second electricity conducting path 35. The flow of current from the first electricity conducting path 34 to the second electricity conducting path 35 is prevented by the first diode 21. The power from the battery 11 is supplied to the first electricity conducting path 34 via the third electricity conducting path 36, The flow of current from the first electricity conducting path 34 to the third electricity conducting path 36 is prevented by the second diode 22.

The BMS starting means 23 is composed of, for example, a communication circuit, a signal output circuit, etc. The BMS starting means 23 is electrically connected to the first electricity conducting path 34. The BMS starting means 23 starts the battery management system 12 on the basis of the power supplied from the first electricity conducting path 34. The BMS starting means 23 starts the battery management system 12 when the switch section 20 is in the supply state and stops the battery management system 12 when the switch section 20 is in the cutoff state. As a result, the battery management system 12 operates when the switch section 20 is in the supply state and stops the operation when the switch section 20 is in the cutoff state. The BMS starting means 23 may be configured such that it is controlled by the control section 24 or may be configured such that it is not controlled by the control section 24.

The determination as to whether or not the switch section 20 is in the supply state may be made on the basis of the state of control of the switch section 20 by the control section 24 or made on the basis of the voltage of the second power path 32 or the current flowing through the second power path 32. The determination as to whether or not the switch section 20 is in the supply state may be made by the BMS starting means 23 or an apparatus other than the BMS starting means 23 (for example, the control section 24).

The control section 24 includes, for example, an arithmetic processing section such as a CPU and memories such as ROM and RAM.

The control section 24 controls the switch section 20. The control section 24 stitches the switch section 20 between the permission state and the cutoff state.

1-3. Action and effect of power control device

In a state in which the battery management system 12 is stopped, the control section 24 monitors the power generated by the solar panel 13. In the case where the power generated by the solar panel 13 is less than a threshold value set to be equal to or greater than the power necessary for starting the battery management system 12, the control section 24 maintains the switch section 20 in the cutoff state. In the case where the power generated by the solar panel 13 is equal to or greater than the threshold value, the control section 24 switches the switch section 20 to the supply state.

In a state in which the power generated by the solar panel 13 is less than the threshold value, the power generated by the solar panel 13 alone is not sufficient for starting the battery management system 12, and therefore the power of the battery 11 is consumed. In this regard, the power control device 14 maintains the switch section 20 in the cutoff state in the state in which the power generated by the solar panel 13 is less than the threshold value. Therefore, the battery management system 12 is maintained in the stopped state, whereby the consumption of power of the battery 11 can be suppressed.

In a state in which the battery management system 12 is operating, when the power generated by the solar panel 13 is greater than a power necessary for controlling the switch section 20 to the supply state, the control section 24 controls the switch section 20 to the supply state. Therefore, the power control device 14 can avoid a situation in which the power of the battery 11 instead decreases due to the supply of power from the solar panel 13.

<Second embodiment>

In a second embodiment, constituent elements identical to those of the first embodiment are denoted by the same signs and their detailed descriptions are omitted.

2-1. Outline of on-vehicle system

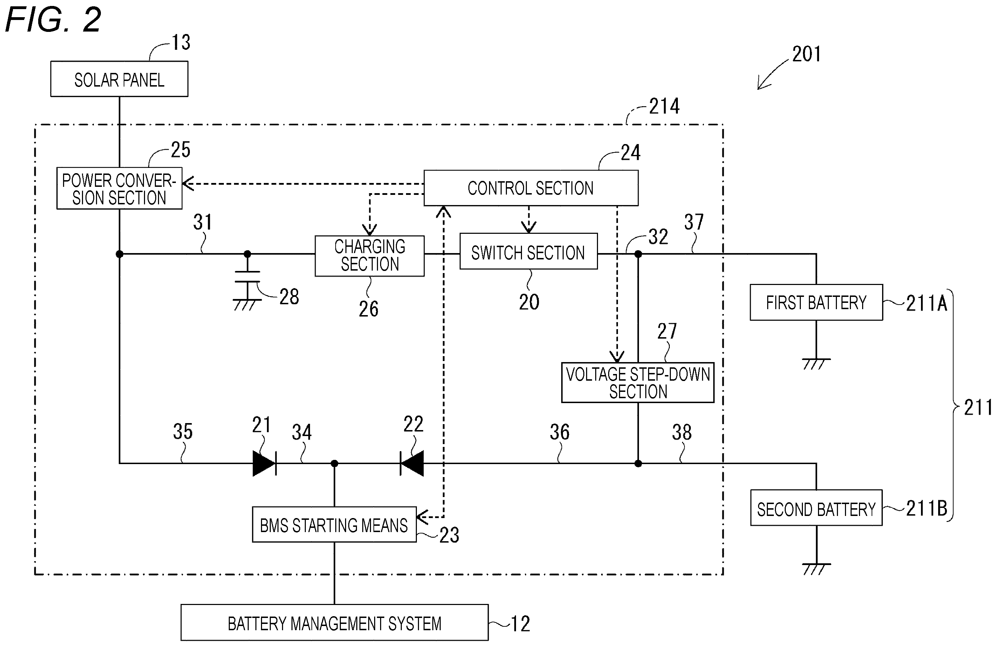

An on-vehicle system 201, which is to be mounted on a vehicle, is shown in FIG. 2. The on-vehicle system 201 includes a battery 211, a battery management system 12, a solar panel 13, and a power control device 214 for an on-vehicle solar panel (hereinafter referred to also as the power control device 214).

The battery 211 includes a first battery 211A and a second battery 211B. The first battery 211A is a high-voltage battery whose output voltage is higher than that of the second battery 211B. The first battery 211A is configured as, for example, a lithium ion battery or a sodium ion battery. The output voltage of the first battery 211A is, for example, 400 V or 800 V

The second battery 211B is a low-voltage battery whose output voltage is lower than that of the first battery 211A. The second battery 211B is configured as, for example, a lead battery or a lithium ion battery. The output voltage of the second battery 211B is, for example, 12 V or 24 V.

The battery management system 12 manages the state of at least one of the first battery 211A and a second battery 211B. The battery management system 12 can operate upon reception of power supplied from the first battery 211A and can operate upon reception of power supplied from the second battery 211B.

The power control device 214 can receive the power supplied from the solar panel 13 and can output the output power based on the supplied power to the first battery 211A and the second battery 211B. The power control device 214 has a function of controlling the power inputted from the solar panel 13 and can perform voltage step-down operation and voltage step-up operation therein.

2-2. Basic configuration of power control device

Like the power control device 14 of the first embodiment, the power control device 214 includes a switch section 20, a first diode 21, a second diode 22, a BMS starting means 23, a control section 24, a first power path 31, a second power path 32, a first electricity conducting path 34, a second electricity conducting path 35, and a third electricity conducting path 36. Furthermore, the power control device 214 includes a power conversion section 25, a charging section 26, a voltage step-down section 27, an electricity storing section 28, a third power path 37, and a fourth power path 38.

The switch section 20 is provided between the solar panel 13 and the battery 211. The switch section 20 switches between a supply state for supplying power from the solar panel 13 to the battery 211 and a cutoff state for cutting off the power.

The first power path 31 is provided between the solar panel 13 and the switch section 20. The first power path 31 corresponds to one example of the power path. The second power path 32 is provided between the switch section 20 and the battery 11. The third power path 37 is provided between the second power path 32 and the first battery 211A. The fourth power path 38 is provided between the second power path 32 and the second battery 211B. Power is supplied from the solar panel 13 to the first battery 211A via the first power path 31, the second power path 32, and the third power path 37.

Power is supplied from the solar panel 13 to the second battery 211B via the first power path 31, the second power path 32, and the fourth power path 38.

The power conversion section 25 is individually provided for each solar panel 13. The power conversion section 25 is provided between the solar panel 13 and the first power path 31. The power conversion section 25 includes an MPPT circuit. The MPPT circuit is composed of, for example, a DC-DC converter. The DC-DC converter includes, for example, a semiconductor switching element. The power conversion section 25 performs conversion operation of stepping down or stepping up the input voltage inputted from the solar panel 13 side and outputting the stepped-down or stepped-up voltage to the battery 211 side. The power conversion section 25 supplies the output power to the first power path 31.

The charging section 26 is provided between the first power path 31 and the switch section 20. The charging section 26 performs charge operation of stepping up the voltage inputted from the power conversion section 25 side and outputting the stepped-up voltage to the battery 211 side. The charging section 26 is composed of, for example, a DC-DC converter. The DC-DC converter includes, for example, a semiconductor switching element. The charging section 26 performs voltage step-up operation for the power supplied from the first power path 31 and supplies the stepped-up voltage to the battery 211 side.

The voltage step-down section 27 is provided between a path composed of the second power path 32 and the third power path 37 and a path composed of the fourth power path 38 and the third electricity conducting path 36. The voltage step-down section 27 performs voltage step-down operation of stepping down the voltage inputted from the path composed of the second power path 32 and the third power path 37 and outputting the stepped-down voltage to the path composed of the fourth power path 38 and the third electricity conducting path 36. The voltage step-down section 27 is composed of, for example, a DC-DC converter. The DC-DC converter includes, for example, a semiconductor switching element. The voltage step-down section 27 performs voltage step-down operation for the power supplied from the path composed of the second power path 32 and the third power path 37 and supplies the stepped-down voltage to the second battery 211B via the fourth power path 38.

The above-described solar panel 13 supplies the generated power to the first battery 211A via the first power path 31, the second power path 32, and the third power path 37. In addition, the solar panel 13 supplies the generated power to the second battery 211B via the first power path 31, the second power path 32, and the fourth power path 38.

When the power conversion section 25 performs the conversion operation, the charging section 26 performs the charge operation, and the switch section 20 is switched to the permission state, power is supplied from the solar panel 13 to the first battery 211A. In addition, when the power conversion section 25 performs the conversion operation, the charging section 26 performs the charge operation, the voltage step-down section 27 performs the voltage step-down operation, and the switch section 20 is switched to the permission state, power is supplied from the solar panel 13 to the second battery 211B.

The electricity storing section 28 is composed of, for example, a capacitor. One end of the electricity storing section 28 is electrically connected to the first power path 31. The other end of the electricity storing section 28 is electrically connected to the ground. The electricity storing section 28 functions as a smoothing capacitor which smooths the output voltage of the power conversion section 25.

The first electricity conducting path 34, the second electricity conducting path 35, and the third electricity conducting path 36 are paths different from the first power path 31, the second power path 32, the third power path 37, and the fourth power path 38. Between the solar panel 13 and the battery 211, the first electricity conducting path 34 is provided parallel to the switch section 20. The second electricity conducting path 35 is provided between the first electricity conducting path 34 and the first power path 31. The third electricity conducting path 36 is provided between the first electricity conducting path 34 and the second power path 32 and the voltage step-down section 27. The third electricity conducting path 36 is provided between the first electricity conducting path 34 and the fourth power path 38.

The control section 24 controls the power conversion section 25. The control section 24 performs maximum power point tracking control for the power conversion section 25. The maximum power point tracking control is a control of changing the operation point of the solar panel 13 such that the power inputted from the solar panel 13 becomes the maximum.

The control section 24 controls the charging section 26. The control section 24 performs charging control of causing the charging section 26 to perform charging operation.

The control section 24 controls the voltage step-down section 27. The control section 24 performs voltage step-down control for causing the voltage step-down section 27 to perform voltage step-down operation.

When the control section 24 performs the maximum power point tracking control for the power conversion section 25 and the charging control for the charging section 26 and controls the switch section 20 to the supply state, power is supplied from the solar panel 13 to the first battery 211A.

When the control section 24 performs the maximum power point tracking control for the power conversion section 25, the charging control for the charging section 26, and the voltage step-down control for the voltage step-down section 27 and controls the switch section 20 to the supply state, power is supplied from the solar panel 13 to the second battery 211B.

2-3. Action and effect of power control device

In a state in which the battery management system 12 is stopped, the control section 24 monitors the power generated by the solar panel 13. In the case where the power generated by the solar panel 13 is less than the threshold value set to be equal to or greater than the power necessary for starting the battery management system 12, the control section 24 maintains the switch section 20 in the cutoff state. **In** the case where the power generated by the solar panel 13 is equal to or greater than the threshold value, the control section 24 switches the switch section 20 to the supply state. Specifically, in the case where the power generated by the solar panel 13 is equal to or greater than the threshold value, the control section 24 switches the switch section 20 to the supply state and performs the maximum power point tracking control for the power conversion section 25, the charging control for the charging section 26, and the voltage step-down control for the voltage step-down section 27.

In the state in which the power generated by the solar panel 13 is less than the threshold value, the power generated by the solar panel 13 alone is not sufficient for starting the battery management system 12, and therefore the power of the battery 211 is consumed. In this regard, the power control device 214 maintains the switch section 20 in the cutoff state in the state in which the power generated by the solar panel 13 is less than the threshold value. Therefore, the battery management system 12 is maintained in the stopped state, whereby the consumption of power of the battery 211 can be suppressed.

In addition, when the control section 24 causes the power conversion section 25 to perform the voltage step-up operation or the voltage step-down operation, the control section 24 switches the switch section 20 to the supply state so as to enable the supply of power from the power conversion section 25 to the battery 211 and then causes the power conversion section 25 to perform the voltage step-up operation or the voltage step-down operation. Namely, the power control device 214 causes the power conversion section 25 to perform the conversion operation after switching the switch section 20 to the supply state so as to enable the supply of power from the power conversion section 25 to the battery 211. Therefore, the power control device 214 is not required to have an electricity storing means (e.g., capacitor) which stores the power outputted from the power conversion section 25 between the power conversion section 25 and the switch section 20.

The electricity storing section 28 is electrically connected to the first power path 31. Therefore, the power supplied from the power conversion section 25 to the battery 211 is easily stabilized by storing electricity in the electricity storing section 28 and discharging electricity from the electricity storing section 28.

In a state in which the battery management system 12 is operating, when the power generated by the solar panel 13 is greater than a power necessary for controlling the switch section 20 to the supply state and performing the maximum power point tracking control for the power conversion section 25, the charging control for the charging section 26, and the voltage step-down control for the voltage step-down section 27, the control section 24 controls the switch section 20 to the supply state and performs the maximum power point tracking control for the power conversion section 25, the charging control for the charging section 26, and the voltage step-down control for the voltage step-down section 27. Therefore, the power control device 214 can avoid a situation in which the power of the battery 211 instead decreases due to the supply of power from the solar panel 13.

The control section 24 controls the power conversion section 25 such that the voltage of the anode of the first diode 21 falls within a voltage range within which current flows from the anode of the first diode 21 to the cathode of the first diode 21. Specifically, the control section 24 controls the power conversion section 25 such that the output voltage of the power conversion section 25 becomes higher than a voltage VA obtained by the following Expression (1).

$$VA = VB - VT2 + VT1 \quad \text{Expression} \quad (1)$$

VB is the voltage of the third electricity conducting path 36.
VT1 is the voltage drop of the first diode 21.
VT2 is the voltage drop of the second diode 22.

Thus, the power from the power conversion section 25 is supplied to the first electricity conducting path 34 in preference to the power from the battery 211. Therefore, the power control device 214 can suppress the consumption of power of the battery 211 more reliably.

<Third embodiment>

In a third embodiment, an example in which the second battery 211B described in the second embodiment is not mounted will be described. Notably, in the third embodiment, constituent elements identical to those of the second embodiment are denoted by the same signs and their detailed descriptions are omitted.

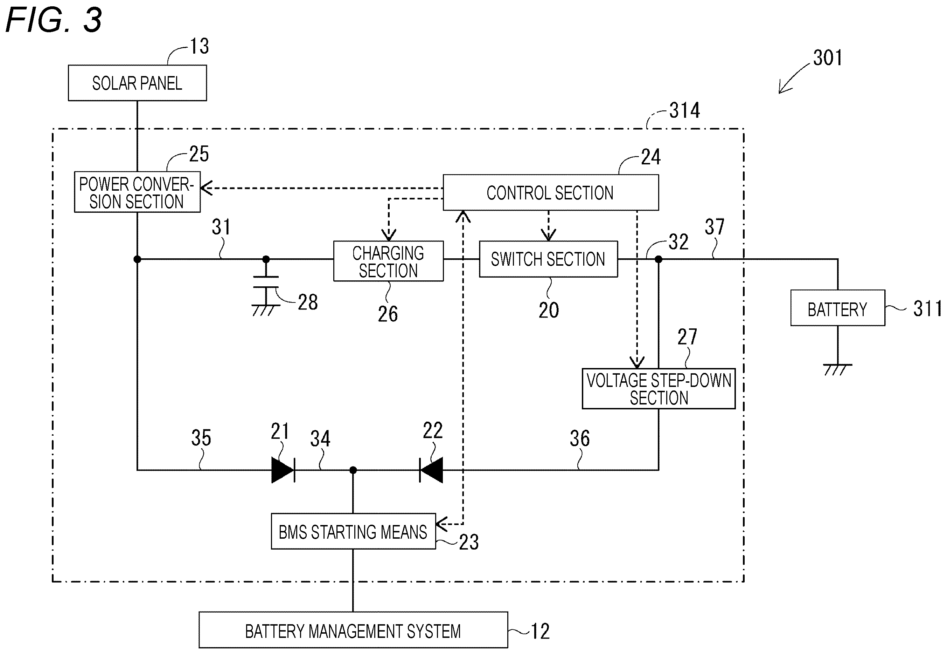

As shown in FIG. 3, an on-vehicle system 301 of the third embodiment includes a battery 311, a battery management system 12, a solar panel 13, and a power control device 314 for an on-vehicle solar panel (hereinafter referred to also as the power control device 314). The battery 311 has the same configuration as the first battery 211A described in the second embodiment.

The power control device 314 is the same as the power control device 214 of the second embodiment except the point that the second battery 211B described in the second embodiment is not connected. The operation of the power control device 314 is the same as the operation of the power control device 214 of the second embodiment.

<Fourth embodiment>

In a fourth embodiment, an example in which the first battery 211A described in the second embodiment is not mounted will be described. Notably, in the fourth embodiment, constituent elements identical to those of the second embodiment are denoted by the same signs and their detailed descriptions are omitted.

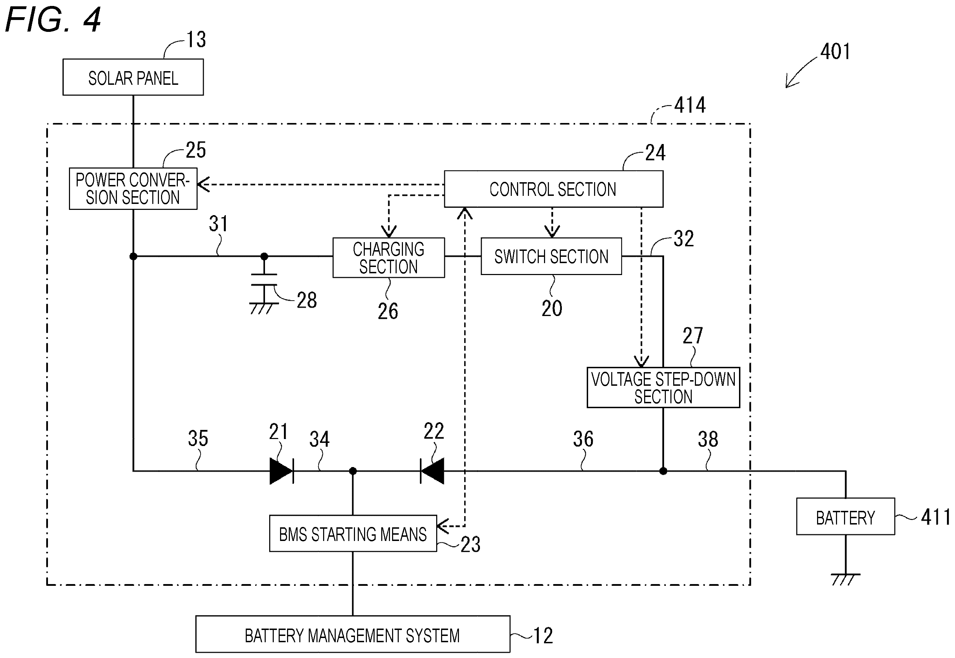

As shown in FIG. 4, an on-vehicle system 401 of the fourth embodiment includes a battery 411, a battery management system 12, a solar panel 13, and a power control device 414 for an on-vehicle solar panel (hereinafter referred to also as the power control device 414). The battery 411 has the same configuration as the second battery 211B described in the second embodiment.

The power control device 414 is the same as the power control device 214 of the second embodiment except the point that the first battery 211A described in the second embodiment is not connected. The operation of the power control device 414 is the same as the operation of the power control device 214 of the second embodiment.

<Other embodiments>

The present invention is not limited to the embodiments described by the above description and the drawings, and, for example, the following embodiments fall within the technical scope of the present invention. Also, various features of the above-described embodiments and the following embodiment may be combined freely so long as no conflict occurs.

In the above-described fourth embodiment, at least one of the charging section 26 and the voltage step-down section 27 may be omitted.

Notably, the embodiments disclosed this time should be considered to be illustrative and not to be restrictive in all aspects. The scope of the present invention is not limited to the embodiments disclosed this time, and it is intended that the present invention encompasses all modifications within the range shown by the claims and the range of equivalents of the claims.

REFERENCE SIGNS LIST

1: on-vehicle system
11: battery
12: battery management system
13: solar panel
14: power control device
20: switch section
21: first diode (diode)
22: second diode
23: BMS starting means
24: control section
25: power conversion section
26: charging section
27: voltage step-down section
28: electricity storing section
31: first power path (power path)
32: second power path
34: first electricity conducting path
35: second electricity conducting path
36: third electricity conducting path
37: third power path
38: fourth power path

201: on-vehicle system
211: battery
211A: first battery
211B: second battery
214: power control device
301: on-vehicle system
311: battery
314: power control device
401: on-vehicle system
411: battery
414: power control device

**Claims**

1. A power control device for an on-vehicle solar panel, which is used in a vehicle including a battery, a battery management system which receives power supplied from the battery and manages the state of the battery, and a solar panel which supplies power to the battery via a power path, the power control device comprising:

   a switch section which is provided between the solar panel and the battery and switches between a supply state for supplying power from the solar panel to the battery and a cutoff state for cutting off the power; and
   a control section which switches the switch section between the supply state and the cutoff state,
   wherein the battery management system operates when the switch section is in the supply state and stops its operation when the switch section is in the cutoff state, and
   wherein, in a state in which the battery management system is stopped, the control section monitors the power generated by the solar panel, maintains the switch section in the cutoff state in the case where the power generated by the solar panel is less than a threshold value set to be equal to or greater than a power necessary for starting the battery management system, and switches the switch section to the supply state in the case where the power generated by the solar panel is equal to or greater than the threshold value.

2. The power control device for an on-vehicle solar panel according to claim 1, further comprising a power conversion section which performs voltage step-up operation or voltage step-down operation for input power based on the power supplied from the solar panel and supplies output power,

   wherein the switch section is provided between the power conversion section and the battery, and
   wherein, when the control section causes the power conversion section to perform the voltage step-up operation or the voltage step-down operation, the control section switches the switch section to the supply state so as to enable supply of power from the power conversion section to the battery and then causes the power conversion section to perform the voltage step-up operation or the voltage step-down operation.

3. The power control device for an on-vehicle solar panel according to claim 1, wherein, in a state in which the battery management system is operating, the control section controls the switch section to the supply state in the case where the power generated by the solar panel is greater than a power necessary for controlling the switch section to the supply state.

4. The power control device for an on-vehicle solar panel according to claim 1, further comprising a power conversion section which performs conversion operation of stepping down or stepping up an input voltage inputted from the solar panel side and outputting the stepped down or stepped up voltage to the battery side,

   wherein the power path is provided between the power conversion section and the battery, and
   wherein the power control device comprises an electricity storing section electrically connected to the power path.

5. The power control device for an on-vehicle solar panel according to claim 4, wherein, in a state in which the battery management system is operating, the control section controls the switch section to the supply state in the case where the power generated by the solar panel is greater than a power necessary for controlling the switch section to the supply state.

6. The power control device for an on-vehicle solar panel according to claim 1 or 4, further comprising:

a power conversion section which performs conversion operation of stepping down or stepping up an input voltage inputted from the solar panel side and outputting the stepped down or stepped up voltage to the battery side;

a first electricity conducting path different from the power path;

a second electricity conducting path provided between the first electricity conducting path and the power conversion section;

a third electricity conducting path provided between the first electricity conducting path and the battery; and

a diode,

wherein an anode of the diode is electrically connected to the second electricity conducting path, and a cathode of the diode is electrically connected to the first electricity conducting path.

7. The power control device for an on-vehicle solar panel according to claim 6, wherein the control section controls the power conversion section such that a voltage of the anode falls within a voltage range within which current flows from the anode to the cathode.

8. The power control device for an on-vehicle solar panel according to any one of claims 1 to 5, wherein the battery includes a first battery and a second battery different from the first battery, and the power from the solar panel is supplied to both of the first battery and the second battery.

9. The power control device for an on-vehicle solar panel according to any one of claims 1 to 5, wherein the switch section is composed of a semiconductor.

## FIG. 1

EP 4 783 413 A1

**FIG. 2**

*FIG. 3*

FIG. 4

SOLAR PANEL — 13

401

414

POWER CONVER-SION SECTION — 25

CONTROL SECTION — 24

31

CHARGING SECTION — 26

28

SWITCH SECTION — 20

32

VOLTAGE STEP-DOWN SECTION — 27

35 21 34 22 36 38

BMS STARTING MEANS — 23

BATTERY — 411

BATTERY MANAGEMENT SYSTEM — 12

EP 4 783 413 A1

## INTERNATIONAL SEARCH REPORT

| International application No. |
|---|
| **PCT/JP2024/013432** |

**A.     CLASSIFICATION OF SUBJECT MATTER**

***H02J 7/35***(2006.01)i; ***B60R 16/04***(2006.01)i; ***H02J 1/00***(2006.01)i; ***H02J 7/00***(2006.01)i
FI:    H02J7/35 J; B60R16/04 V; H02J1/00 307G; H02J7/00 P

According to International Patent Classification (IPC) or to both national classification and IPC

**B.     FIELDS SEARCHED**

Minimum documentation searched (classification system followed by classification symbols)

H02J7/35; B60R16/04; H02J1/00; H02J7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| Y | JP 2021-083249 A (TOYOTA JIDOSHA KABUSHIKI KAISHA) 27 May 2021 (2021-05-27) paragraphs [0011], [0013]-[0014], [0016], [0019]-[0029], [0032], [0036], [0038], fig. 1-3 | 1-9 |
| Y | JP 2006-340578 A (SHARP KABUSHIKI KAISHA) 14 December 2006 (2006-12-14) paragraphs [0021], [0023], [0028]-[0030], [0049]-[0052], fig. 1, 6 | 1-9 |
| Y | JP 2013-211947 A (SONY CORPORATION) 10 October 2013 (2013-10-10) paragraphs [0016], [0019], [0071]-[0072], fig. 6 | 6-9 |
| Y | WO 2014/103051 A1 (HITACHI, LTD.) 03 July 2014 (2014-07-03) paragraphs [0018], [0021]-[0022], [0044], fig. 3 | 6-9 |

☐ Further documents are listed in the continuation of Box C.          ☑ See patent family annex.

| | | |
|---|---|---|
| *   Special categories of cited documents: | "T" | later document published after the international filing date or priority date and not in conflict with the application but cited to understand the principle or theory underlying the invention |
| "A"  document defining the general state of the art which is not considered to be of particular relevance | | |
| "D"  document cited by the applicant in the international application | "X" | document of particular relevance; the claimed invention cannot be considered novel or cannot be considered to involve an inventive step when the document is taken alone |
| "E"  earlier application or patent but published on or after the international filing date | | |
| "L"  document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"  document referring to an oral disclosure, use, exhibition or other means | | |
| "P"  document published prior to the international filing date but later than the priority date claimed | "&" | document member of the same patent family |

| Date of the actual completion of the international search | Date of mailing of the international search report |
|---|---|
| **04 June 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/013432**

| Patent document cited in search report | | | Publication date (day/month/year) | Patent family member(s) | Publication date (day/month/year) |
|---|---|---|---|---|---|
| JP | 2021-083249 | A | 27 May 2021 | (Family: none) | |
| JP | 2006-340578 | A | 14 December 2006 | (Family: none) | |
| JP | 2013-211947 | A | 10 October 2013 | (Family: none) | |
| WO | 2014/103051 | A1 | 03 July 2014 | US 2015/0303731 A1 paragraphs [0024], [0026]-[0027], [0048], fig. 3 CN 104025414 A KR 10-2014-0107098 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021062841 A